# EUROPEAN PATENT SPECIFICATION

(11) **EP 2 559 673 B1**
(45) Date of publication and mention of the grant of the patent: **03.10.2018**
(21) Application number: 11006837.6
(22) Date of filing: 19.08.2011
(51) Int. Cl.: C03C 25/10, C03C 25/30, C04B 14/42, C04B 20/10, C03C 25/26, C03C 25/28

(54) **Sizing composition for fibers and sized fibers**
Schlichtungszusammensetzung für Fasern und geschlichtete Fasern
Composition d'encollage pour fibres et fibres encollées

(43) Date of publication of application: 20.02.2013
(73) Proprietor: Johns Manville, Denver, CO 80202 (US)
(72) Inventor: Kriskova, Antonia, Trnava, Slovakia 917 01 (SK); Wiesenganger, Tomas, Bratislava, Slovakia 851 10 (SK)
(74) Representative: Mai Dörr Besier European Patent Attorneys

(56) References cited:
- DE-U1-202006 011 686
- US-A1- 2009 186 222
- DATABASE WPI Week 197948 Thomson Scientific, London, GB; AN 1979-86546B XP002667204, -& JP 54 134131 A (KANEBO LTD) 18 October 1979 (1979-10-18)
- DATABASE WPI Week 197827 Thomson Scientific, London, GB; AN 1978-48339A XP002667210, -& JP 53 058092 A (KANEBO LTD) 25 May 1978 (1978-05-25)
- DATABASE WPI Week 197813 Thomson Scientific, London, GB; AN 1978-24532A XP002667211, -& JP 53 006168 B (MATSUSHITA ELECTRIC WORKS LTD) 6 March 1978 (1978-03-06)

## Description

Chopped fibers, in particular inorganic fibers, such as fiberglass and ceramic fibers, are designed to perform several functions, inter alia for producing chopped strand reinforced polymer products. In order to be suitable for such applications, the fibers, such as fiberglass, require a sizing coating on the fibers.

Sizings for inorganic fibers, such as fiberglass and ceramic fibers, are known and normally contain (i) a coupling agent such as one or more silanes, (ii) one or more lubricants and (iii) one or more film formers or binders, and can contain other ingredients such as dispersants, fillers, stabilizers and others. The sizing is typically applied as an aqueous slurry, solution or emulsion, but liquids other than water are sometimes used including a solvent for at least one of the sizing ingredients.

A typical process for making chopped strand reinforcements can be seen in U. S. Patent 3,996,032. These types of processes produce chopped strand bundles having a wide range of diameters and containing a wide range of numbers of fibers, e.g. from just a few fibers to 4000 or more fibers per segment.

Important to the users, a substantial amount of film former or binding agent is used in the chemical sizing coated on each fiber during its manufacture to prevent filamentation during storage, shipment and handling. Filamentation is the breaking down of the bundles resulting in excessive small bundles and individual fibers in the product, the presence of which causes bridging in the feeding bin cones, and other fiber handling equipment resulting costly scrap and downtime.

Typically, the higher amount of film former, bonding agent(s), used in the sizing on the fibers results in stronger fiber to fiber bonding in the bundles. This, however, is good for fiber handling characteristics, but not good for later processing and final product characteristics, e.g. when feeding the fiber bundles into a compounding or extruding machine along with one or more polymers and heating with high shear mixing to plasticize the polymer(s) and disperse the fibers therein. Once in the compounder and in contact with the polymer(s) it is usually desirable that the bundles separate into individual fibers and that the fibers disperse thoroughly in the polymer(s). The time and amount of mixing action to accomplish this has a practical limit, and because of the bond strength between the fibers, very high shear mixing is required to achieve a suitable degree of filamentation, fiber dispersion and wet out (coating of the fibers with the polymer or polymer mixture). This very high shear damages the surface and breaks the fibers, and also falls short of complete fiber dispersion. As a result, the reinforced plastic parts produced do not reach the potential in surface characteristics and physical properties. Similar observations are made when dispersing the fibers is other media such as hydraulic cement and gypsum based cement as described below.

Beside the aforementioned applications, inorganic fibers, such as glass fibers and ceramic fibers, are useful in a variety of technologies, including the production of gypsum wall boards. In this application, the inorganic fibers, such as glass fibers and ceramic fibers improve the tensile and tear strength of the gypsum wall board products as well as fire resistance of gypsum wall board. The fibers may be employed in many forms, including individual fibers, strands containing plural fibers, and rovings. These fiber products, in turn, may be used in discrete form and incorporated into a gypsum matrix or they may be assembled into woven or nonwoven fabrics or mats and utilized as the facing material. For example, glass fibers may be formed by drawing molten glass into filaments through a bushing or orifice plate and applying an aqueous sizing composition containing lubricants, coupling agents, and film-forming binder resins onto the filaments. As mentioned before, the sizing composition provides protection of the fibres from inter filament abrasion and promotes compatibility between the glass fibers and the matrix in which the glass fibers are to be used later on as well as enables dispergation in the matrix.

After the sizing composition has been applied, the sized fibers may be gathered into separate strands and wound to produce an inorganic fiber, in particular glass fiber and ceramic fiber, fiber package. The package may then be heated to remove water and deposit the size as a residue lightly coating the surface of the inorganic fiber, especially glass fiber and ceramic fiber.
Multiple numbers of the resulting dried fiber packages, such as glass fiber packages, may be consolidated and wound onto a spool referred to as a roving doff or package. The roving package is composed of an inorganic strand, in particular glass strand, with multiple bundles of fibers.

These fibers, such as glass fibers, form a roving package and may be after chopping deposited into a cements or gypsum slurry to add mechanical strength to the formed hydraulic set cement or gypsum board.

However, conventional glass rovings do not flow or disperse well in the required cement or gypsum slurry and, as a result, boards, in particular gypsum boards, are formed that have an uneven distribution of glass fibers within the board. Such an uneven distribution of fibers can cause weakness and/or failure of the board, in particular for gypsum board especially in ASTM E119 - 11 "Standard Test Methods for Fire Tests of Building Construction and Materials".

The main functions of the sizing can be summarized as follows:

| | | |
|---|---|---|
| I. | Lubrication: | protect fibers from interfilamentary abrasion during initial fiber forming and chopping; |
| II. | Anti-Static: | reduce electrostatic potential on glass fiber surface and by that minimizes creation of agglomerates and creation of fuzz during processing of fiber; |
| III. | Film-Forming: | to prevent filamentation during storage, shipment and handling; to hold the fibers together, enhance and control sizing wet-out along the fiberglass surface; |
| IV. | Biological Control: | inhibit bacterial, fungal, or mold/mildew growth on fiber surface or in process white water, hydreaulic cement or gypsum slurry or other media; |
| V. | Dispersion: | assist filamentization of fiber bundles in process white water, hydraulic cement gypsum slurry or other media; |
| VI. | Chemical Coupling: | provide strong chemical interfacial bonding between glass fibers and in the matrix. |

Conventional glass rovings coated with sizing composition, which is used as reinforcement of gypsum are known per se.

U.S. Patent 4,473,618 relate to sizing composition which comprises as bonding film-forming agents, a combination of a polymer of vinyl acetate and ethylene, a polymer of vinyl acetate and an epoxy-functional vinyl monomer, and an unsaturated polyester resin.

U.S. Patent 5,700,574 relates a sizing composition for glass roving which comprises a vinyl acetate copolymer emulsion, a polyvinyl acetate copolymer latex, and a vinyl acrylic copolymer emulsion.

Patent FR 2,755,127 relates sizing composition which is obtained in particular from an aqueous solution, comprises as bonding film-forming agents, a combination of at least one low molecular weight polyvinyl acetate, and of at least one thermally self-crosslinking polyvinyl acetate copolymer.

In addition, JP 54-134131 and JP 53-058092 discloses sizing compositions used for coating glass fibers that are used for reinforcing cement.

The glass rovings coated with sizing compositions according to the state of the art provide good processing properties in terms of choppability, fuzz and statics, but do not reach satisfactory fiber dispersion in cement or gypsum slurry.

The problem underlying the instant invention is to provide a sizing composition which overcomes the aforementioned shortcoming and in particular allow for satisfactory inorganic fiber dispersion in cement and/or gypsum slurries. In addition, the sizing composition should be applied using existing techniques and in a controlled manner.

The instant inventors found that a specific sizing composition provides a solution to the aforementioned problems.

The instant invention relates to an aqueous sizing composition as defined in claim 1.

The aqueous sizing composition can further comprise one or more functional ingredients selected from the group consisting of anti-foaming agents, biocides, fungicides and wetting agents.

Typically, the aqueous sizing composition of the present invention contain a combination of polyvinyl acetate emulsion and partially hydrolysed polyvinyl alcohol; the aqueous sizing composition of the present invention does not contain a combination of a copolymer of vinyl acetate and ethylene combined with a copolymer of vinyl acetate and glycidyl methacrylate (U.S. Patent 4,473,618) or a combination of vinyl acetate copolymer emulsion, a polyvinyl acetate copolymer latex, and a crosslinking vinyl acrylic copolymer emulsion (U.S. Patent 5,700,574) or a combination of polyvinyl acetate with a thermally self-crosslinking polyvinyl acetate copolymer (Patent FR 2,755,127).

In the present invention the aqueous sizing composition is applied onto the surfaces of inorganic fibers, such as glass and/or ceramic fibers, during their manufacture. The sized fibers are gathered into strands of wet, sized fibers and then chopped to form chopped strand or wound into packages of rovings. The chopped strands or rovings of wet, sized inorganic fibers can then be dried or at least partially dried. The moisture content of the dried fibers can be as high as about 2 wt. percent, but normally is less than about 1 wt. percent.

The aqueous sizing composition of the invention contain one or more coupling agents and one or more lubricants and can contain other functional ingredients like biocides or anti-foam agents, etc.

The coupling agents, preferred are silane coupling agents, are well known per se. Typically, the total amount of coupling agents, out of which silane coupling agents are preferred, vary in the range of about 0.03 wt. percent to about 0.5 wt. percent of the aqueous sizing composition.

The lubricants are well known per se. Typically, the total amount of lubricants vary in the range of about 0.2 wt. percent and about 1.5 wt. percent, more typically less than about 0.8 wt. percent of the aqueous sizing composition.

The aqueous sizing compositions of the invention contain at least one polymeric film former, said polymeric film former being a composition as defined in claim 1.

The total amount of the polymeric film former composition vary in the range of about 4 wt. percent and about 16 wt. percent, preferably from about 6 wt. percent to about 12 wt. percent, of the aqueous sizing composition.

The weight ratio of the at least one low molecular weight polyvinylacetate and/or at least one middle molecular weight polyvinylacetate (component A) to the at least one low viscosity partially hydrolysed polyvinyl alcohol (component B) is from 0.5 to 3.0, preferably from 1.1 to 3.0, most preferred from 1.5 to 3.0.

The remainder of the aqueous sizing composition up to 100% will be water and known functional ingredients like biocides, anti-foaming agents, fungicides, pH controller and the like.

Typically, the aqueous sizing has a pH value from pH 3 to pH 7. The adjustment of the pH value can be achieved by adding suitable acids, such as phosphoric acid and/or sulfuric acid, in particular suitable organic acids, such as acetic acid, citric acid and/or glacial acetic acid.

Typically, the aqueous sizing should be applied to the inorganic fibers in amounts that the loss on ignition of the sized inorganic fibers, such as glass fibers, is in the range of about 0.2 to about 2.0 wt. percent, preferably in the range about 0,4 to about 1,2

Within the component A), low molecular weight polyvinyl acetate are those having an weight average molecular weight between about 60,000 g/mol and about 40,000 g/mol, most preferred around about 50,000 g/mol +/- 5,000g/mol.

Within the component A), middle molecular weight polyvinyl acetate are those having an weight average molecular weight between about 80,000 g/mol and about 180,000 g/mol, more preferably between about 120,000 g/mol and about 180,000 g/mol, most preferred between about 160,000 g/mol and about 180,000 g/mol.

Component A) are mixtures of low molecular weight polyvinyl acetate and middle molecular weight polyvinyl acetate, in particular mixtures having a weight ratio of low molecular weight polyvinyl acetate to middle molecular weight polyvinyl acetate from 0.5 to 2, preferably from 0.5 to 1, most preferred from 0.5 to 0.95, each polyvinyl acetate having the above mentioned preferred average molecular weight combination.

Within the component B), preferred low viscosity partially hydrolysed polyvinyl alcohols are those having an average molecular weight between about 10,000 g/mol and about 60,000 g/mol, more preferably between about 20,000 g/mol and about 40,000 g/mol, most preferred between about 25,000 g/mol and about 35,000 g/mol.

Within the component B), preferred are those low viscosity partially hydrolysed polyvinyl materials having a degree of hydrolysis between 80.0 and 95.0 mol. %, more preferably between 86.0 and 89.0 mol. %.

The aqueous sizing compositions of the invention provides at least partially coated inorganic fibers, such as glass fiber and/or ceramic fibers, in the form of rovings having improved choppability, improved fuzz, improved static performance, improved fiber feeding, fiber flow, and in preference improved fiber dispersion in a gypsum matrix or slurry.

The film former a materials is meant that, after all or most (leaving less than 1 wt. percent in the fiber strand) of the water in the wet sized fiber strands has been removed from the sizing on the fibers, function to bind the fibers together in the strand with such strength that substantial mechanical action is required to separate the fibers in the strand from one another, and even then the strand tends to break down in a plurality of smaller.

The superior performance in the fiber strand products of the invention is due to the presence of a polymeric film former being a composition as defined in claim 1.

The film former is conventionally added to the size for the purpose of bonding the fibers together in the remainder of the strand product manufacturing processes, including during wet chopping, during vibration in the drying process, and during the process of making assembled rovings from dry fiber strands wound in cakes or packages. Without the film former in the sizing, the fiber strands would come apart causing fuzz, strands containing fewer fibers than desired, and broken fibers detracting from the product quality and substantially increasing scrap, reducing productivity and adding other product costs necessary to remove fuzz, restart broken strands, etc. The film former in the sizing does not enhance the performance of the reinforcing strands in the later fiber-reinforced products, but can detract from the desired performance when the film former is incompatible with the later matrix material and the required processing steps being involved.

The reinforcing strand products of the invention contain sized fibers and the fiber strand products of the invention will be in the form of chopped strands of fibers, normally having a moisture content of less than 1 wt. percent, more typically less than 0.5 wt. percent and most typically less than about 0.3 wt. percent to bone dry.

The fiber products of the invention will also include a roving, normally a direct wound roving, and will have been dried to a moisture content of less than 1 wt. percent, typically less than 0.5 wt. percent and most typically less than 0.3 wt. percent. The moisture content of the fiber products of the invention can be zero wt. percent, but normally the product, even if reduced to bone dry in the drying process, will absorb from 0.02 to about 0.2 wt. percent from the humidity in the air in packaging and storage and/or shipping.

The fibers are most typically inorganic fibers, preferably glass fibers and/or ceramic fibers, but can also include carbon fibers and other inorganic mineral fibers including oxides, carbides, nitrides and borides of silica, aluminum, zircon, magnesium and zirconium. Preferred are E or C glass fibers in diameter of about 8 to 25 µm.

Conventional forming processes are used to make the fibers in the reinforcing strand products and the method of forming the fibers including application of the sizing is not part of the invention, because they are already state of the art to such extent they are not using the sizing composition of the present invention.

The sizing compositions of the invention are applied to the fibers before forming the fiber strands, winding and drying.

The sizing compositions of the invention, beside the polymeric film former, contain one or more coupling agents, preferably silane based coupling agents.

Most preferred silane coupling agents in the practice of the present invention include reactive organofunctional silanes having the formula (I)

R₆ R₅ (R₄) N-R₃-Si(R₂)ₐ(Y(R₁)_{b})ₐ (I)

wherein R1 and R2 are monovalent radicals, R3 is a divalent radical, R4, R5 and R6 are monovalent radicals, and Y is oxygen or nitrogen, a=1 to 3, and b=1 or 2 depending on the valence of Y. In formula (I) above, R1 is a monovalent radical, e.g., hydrogen, a dialkylamine, or, preferably a hydrocarbon functionality, including, but not limited to, allyl, cycloalkyl, or alkyl (linear or branched) that may contain heteroatoms, e.g., oxygen or nitrogen. Most preferably R1 is an alkyl radical of 1-6 carbon atoms, e.g., methyl, ethyl, n-propyl, or iso-butyl. The value of b depends on the valency of Y, i.e., b=1 for oxygen and b=2 for nitrogen. Preferably Y is oxygen. Preferably a is 3, but if a<3, each R2 is a monovalent radical, including, but not limited to, a hydrocarbon radical, a saturated hydrocarbon, or an unsaturated hydrocarbon. Preferably R2 is cycloalkyl, or alkyl (linear or branched) that may contain heteroatoms, e.g., oxygen or nitrogen, and 1-10 carbon atoms. Most preferably R2 is methyl or ethyl. R3 is a divalent radical, preferably having 1-10 carbon atoms, and preferably cycloalkyl, or alkyl (linear or branched) that may contain heteroatoms, e.g., oxygen or nitrogen. Most preferably R3 is propyl. A preferred has R1=ethyl, R2=0, R3=propyl, R4=hydrogen, R5=0, R6= -C(=O)NH2, a=3, b=1, and Y=oxygen. Such silanes include uriedopropyltriethoxysilane that is commercially available as Y- or A-11542 and aminopropylsilane that is commercially available as A 1100 from GE/OSi Silicones. There are many other conventional silanes and conventional coupling agents typically used in fiber size compositions and these are suitable for the sizings of the invention.

The ratio of the coupling agent(s) to the lubricant(s) in the water or other liquid solvent or carrier can be critical to the sizing compositions of the invention as is the concentration of the sizing components on the fibers. This ratio should be in the range of about 1:3 to about 1:2 for best results.

The concentration of sizing components on the fibers can be measured by running a conventional loss on ignition test (LOI) on the sized fibers after they are reduced to bone dry according to ISO 1887.

The sizing compositions of the invention, beside the polymeric film former, contain one or more lubricants which may also function as a wetting agent or dispersant.

Preferred lubricants in the practice of the present invention include cationic, nonionic or anionic lubricants and mixtures thereof. Most preferred lubricants include amine salts of fatty acids (which can, for example, include a fatty acid moiety having 12 to 22 carbon atoms and/or tertiary amines having alkyl groups of 1 to 22 atoms attached to the nitrogen atom), alkyl imidazoline derivatives (such as can be formed by the reaction of fatty acids with polyalkylene polyamines), acid solubilized fatty acid amides (for example, saturated or unsaturated fatty acid amides having acid groups of 4 to 24 carbon atoms such as stearic amide), condensates of a fatty acid and polyethylene imine and amide substituted polyethylene imines.

Preferred dispersant used in the sizing composition comprises at least one of a fatty amide and a fatty imidazoline, and more preferably, a mixture thereof. One such mixed dispersant is commercially available as LUBRIL™ Cat-X VC from Eastman Chemical.

The sizing can also contain one or more surfactants to accomplish at least one of the functions of improving the wetting of fibers by the aqueous sizing formulation, reducing surface attraction between the fibers; and emulsifying certain constituents of the sizing composition. One desirable class of surfactants is ethoxylated amines and diamines and derivatives thereof. Typically, the surfactant(s), if used, is present in the sizing composition in an amount ranging from 0 to 2 wt.% of the aqueous sizing. More typically 0 to about 1 wt % is present, and most typically, about 0 to 0.75 wt % is present.

The sizing composition can also contain one or more biocide agents that kill microbes in the composition and inhibit new microbial growth that can, in some cases, cause gradual breakdown of the sizing agents on the fiber surface during storage, leading to impaired performance. Preferably the biocide is active against fungi, bacteria, slime, and other microorganisms known to detrimentally affect fiber performance. Often two or more agents are used in amounts effective to provide both immediate and long-term antimicrobial functionality. Among the biocides suitably included are isothiazolin based salts, methylene bis(thiocyanate), 2-2-dibromo-3-nitropropionamide, 1,4-bis(bromacetoxy)-2-butene, 2,2-dibromo-2-cyanoacetamide, 5-oxo-3,4,-dichloro-1,2-dithiol, sodium dimethyldithiocarbamate. The more preferable biocides are isothiazolin based salts, methylene bis(thiocyanate), and 2-2-dibromo-3-nitropropionamide, which are sold as CL-2150, CL-2141, and CL-206 by Chemtreat, respectively. The amount of biocide used in the sizing composition is frequently limited by environmental considerations and government regulations. For example, regulations permit use of up to about 1200 ppm of the CL-206 formulation, which is known to provide 240 ppm of active agent. The CL-2141 and CL-2150 materials are beneficially used at a level of about 1600 ppm to provide 25 ppm of active agent. Suitable effective amounts of other agents are known to those skilled in the art.

The use of the present polymeric film former, allows for the elimination of other film formers, so that only the present polymeric film former can be present. As result thereof, preferably the aqueous sizing composition according to the instant invention does not contain other film former than the present polymeric film former as defined above.

The invention also includes the method of sizing the fiber strand products of the invention, the comprising steps of feeding fibers to a sizing applicator, applying a sizing composition of the invention described above onto the surfaces of the fibers, gathering the fibers into a strand, chopping the fiber strands into a desired length or winding the strand(s) of sized fibers onto a mandrel to form a roving package (assembling step may include the application of a secondary antistatic agent), drying the chopped strands or roving packages and finishing the dry roving packages or dried chopped fiber strands into a form suitable for storage and shipping. The finishing typically includes placing a fixed weight of dry chopped fiber strands into a plastic bag, in a kraft box or shipping container, and sealing the plastic bag to prevent moist air from entering the plastic bag. In the case of rovings the finishing normally includes placing the dry roving packages in a plastic bag or enclosing each roving package in a shrink wrap or stretch wrap and placing the enclosed roving packages on a pallet or in a shipping container in a conventional manner.

The invention also includes feeding the sized fiber strands, roving or chopped, into an apparatus for blending dispersing, breaking in the case of roving and kneeding the sized fiber fibers into cement or gypsum slurry for producing hydraulic set cement or gypsum boards. Glass fiber reinforced gypsum boards are produced with different systems of feeding glass fiber to gypsum slurry. The conventional systems use wet chopped strand which provides very good dispersion of fiber in the slurry because filmformer is not dried and it is easier to be dispersed in water based gypsum slurry as well as water decreases risk of creation of electrostatic charge. The second option is chopping of strand directly to gypsum slurry where protection of the fiber against mechanical load during unwinding and chopping by filmformer in cured form is needed. The present invention allows use dry strand with low electrostatic charge creation and very good dispersion of fiber in the gypsum slurry. Standard choppable rovings are used currently in the second option where good chopability and electrostatic charge creation is reduced, but worse dispersion of fiber in gypsum board is achieved.

Gypsum boards and gypsum panels are traditionally manufactured by a continuous process. In this process, a gypsum slurry is first generated in a mechanical mixer by mixing at least one of anhydrous calcium sulfate (CaSO₄) and calcium sulfate hemihydrate (CaSO₄•0,5H₂0, also known as calcined gypsum), water, and other substances, which may include set accelerants, waterproofing agents, reinforcing mineral, glass fibers, and the like. The inorganic fibers sized with the sizing of the present invention can be added directly to the slurry or dispersed in water being added. Typical amounts for the sized fibers to be added to the slurry include up to 2%.

The gypsum slurry is normally deposited on a continuously advancing, lower facing sheet, such as kraft paper. The facing sheets and gypsum slurry are passed between parallel upper and lower forming plates or rolls in order to generate an integrated and continuous flat strip of unset gypsum sandwiched between the sheets. Such a flat strip of unset gypsum is known as a facing or liner. The strip is conveyed over a series of continuous moving belts and rollers for a period of several minutes, during which time the core begins to hydrate back to gypsum (CaSO₄•2H₂0). The process is conventionally termed "setting," since the rehydrated gypsum is relatively hard. Once the gypsum core has set sufficiently, the continuous strip is cut into shorter lengths or even individual boards or panels of prescribed length.

After the cutting step, the gypsum boards are fed into drying ovens or kilns so as to evaporate excess water. Inside the drying ovens, the boards are blown with hot drying air. After the dried gypsum boards are removed from the ovens, the ends of the boards are trimmed off and the boards are cut to desired sizes. The boards are commonly sold to the building industry in the form of sheets nominally 4 feet wide and 8 to 12 feet or more long and in thicknesses from nominally about 0.5cm to 3cm, the width and length dimensions defining the two faces of the board.

The aqueous sizing composition of the present invention provides sized inorganic fibers, in particular glass fibers, having a sufficient stiffness and surface potential, while providing improved dispersibility in water and cement or gypsum slurry.

Production of final roving consists of these steps: Production of glass filaments - 15 micrometers in diameter, winding of filaments in the form of reels. Each reel consists of 5 - 10 base fibbers. Reels are drying and the drying step lasts 12 to 18 hours depending on the weight of the reel, at a temperature of about 110 to 140°C. Still in a manner which is known per se, the glass fibers are then assembled as roving, each roving consisting of 30 to 50 base fibers. The strand of final assembled roving is fixed by hot are procedure. All qualitative parameters of assembled roving are tested after cooling down to lab temperature.

The determination of stiffness of rovings is done based on ISO 3375:2009 (0,5m of the roving is rehanged through the hook of the equipment, than the distance between both centers of both sides of the roving is measured in a well defined distance from the hook).

Typical values of fiber stiffness are higher than 130mm, this is sufficient for fibres used for chopping.

The measurement of surface potential is done by means of a SIMCO FMX-002 equipment; the work distance being 2.54cm (1 inch); the roving is first tempered for 24 hours in a room with low air moisture, consequently it is cut for 15 seconds, the cut fibres are falling on a plastic saucer, immediately after this step, the decrease of the electrostatic potential of the fibre in time is measured; the electrostatic potential is directly proportional to the surface potential). Typical values are app. 0.3kV/inch.

The dispersibility in water is measured as follows:
Assembled roving is chopped into choppers of length 24 mm. Then 20g of the chopped strands are put in a glass beaker of volume 600 ml filled with 500 ml of distilled water tempered to 25°C. The mixture is stirred by a glass bar for 15 seconds. One minute after mixing, the degree of fibre dispersibility is determined. Dispersibility is calculated as a ratio of bottom phase (consisting of fibers dispersed in water) to whole volume (including bottom phase with fibers and also upper water phase without fibres). Because the diameter of a beaker is constant, the ratio of volumes is the same as ratio of phase's heights.
Typical values for dispersibility of currently used fibers (spray-up and panel rovings) are around 25 to 35%. In contrast, this new invented fiber reaches dispersibility of at least 50%, in particular of at least 70%.

The invention also includes hydraulic set cement or gypsum boards comprising inorganic fibers being sized with the sizing of the present invention.

When the word "about" is used herein it is meant that the amount or condition it modifies can vary some beyond that stated so long as the advantages of the invention are realized. Practically, there is rarely the time or resources available to very precisely determine the limits of all the parameters of one's invention because to do so would require an effort far greater than can be justified at the time the invention is being developed to a commercial reality. The skilled artisan understands this and expects that the disclosed results of the invention might extend, at least somewhat, beyond one or more of the limits disclosed. Later, having the benefit of the inventors' disclosure and understanding the inventive concept and embodiments disclosed including the best mode known to the inventor, the inventor and others can, without inventive effort, explore beyond the limits disclosed to determine if the invention is realized beyond those limits and, when embodiments are found to be without any unexpected characteristics, those embodiments are within the meaning of the term "about" as used herein. It is not difficult for the artisan or others to determine whether such an embodiment is either as expected or, because of either a break in the continuity of results or one or more features that are significantly better than reported by the inventor, is surprising and thus an unobvious teaching leading to a further advance in the art.

The invention is further illustrated with the following examples.

### EXAMPLES

### Example 1

A sizing composition according to the invention was manufactured using the following starting materials:

| | |
|---|---|
| Compound "A": | low molecular weight polyvinyl acetate of molecular weight 50,000, marketed by Celanese under the reference "Vinamul 8852", and a middle molecular weight polyvinyl acetate with average molecular weight 170,000, marketed by Duslo a.s under the reference "Duvilax LM 52", |
| Compound "B": | low viscosity partially hydrolysed polyvinyl alcohol of molecular weight 30,000, marketed by Borregaard under the reference "Polyvinyl alcohol BP-05" or "Celvol 205" marketed by Celanese. |

The aqueous sizing composition according to Example 1 comprises:
- 3.5 % wt. of middle molecular weight polyvinyl acetate of molecular weight 170,000 (Compound A),
- 5.5 % wt. of low molecular weight polyvinyl acetate of molecular weight 50,000 (Compound A),
- 4.5 % wt. of low viscosity partially hydrolysed polyvinyl alcohol of molecular weight 30,000 (Compound B),
- 0.36 % wt. of coupling agent, benzylaminoetyl aminopropyl silane marketed by Evonik under the reference "Dynasilane 1161", 0, 18 % wt. of glacial acetic acid,
- 0.06 % % wt. of an amide substituted polyethyleneamine marketed by Pulcra under the reference "Katax 6717", 0,22 % wt. polyethylene glycole 600 monooleate marketed by Pulcra under the reference "Standapol 2660",
- 0.25% wt. of lithium chloride,
- remainder up to 100% of deionized water.

The sizing composition according to example 1 is used to size, in a known manner, base fibers consisting of glass filaments 15 micrometers in diameter, assembled in the form of a reel.
The reels of base fibers are dried, also in a known manner, by a suitable heat treatment, this drying intended to remove the water from the sizing composition. In general, the drying step lasts 12 to 18 hours depending on the weight of the reel, at a temperature of about 110 to 140°C.
Still in a manner which is known per se, the glass fibers are then assembled as roving, each roving consisting of 30 to 50 base fibers. In the table, at the end of the examples, are noticed qualitative and processing parameters of the roving sized with sizing composition according to Example 1, compared with reference (competitor) roving type.

**Testing results**

| Parameter Sizing comp. | LOI /%/ | Stiffness /mm/ | Fuzz /mg/kg/ | Surface *potential /kV/inch/ | Powder density (g/l) | Sizing solubility in water /%/ | Dispersion in water /%/ |
|---|---|---|---|---|---|---|---|
| Example 1 | 0.97 | 143 | 17.8 | 0.25 | 153 | 22.4 | 55 |
| Referenc. 1 | 1.05 | 145 | 20.1 | 0.25 | 148 | 8.6 | 35 |
| Referenc.2 | 1.12 | 140 | 22.6 | 0.30 | 160 | 5.8 | 25 |

On reading this table, it can be seen that Example 1 shows slightly improved fuzz and significantly improved solubility in water and fiber dispersion in water.

On the other hand, Reference 1 and 2 show very good results concerning the stiffness, fuzz and surface potential, but very unsatisfactory solubility in water and fiber dispersion in water.

In conclusion, it can be seen that the main advantage of the sizing according to the invention, is the very significant improvement of the solubility of fibers in water and fiber dispersion in water as a gypsum slurry.

## Claims

1. An aqueous sizing composition comprising
(i) at least one polymeric film former,
(ii) at least one coupling agent,
(iii) one or more lubricant,
(iv) one or more antistatic agent
(v) water,
wherein the at least one coupling agent is a silane coupling agent and the polymeric film former is a composition present in amounts ranging from 4 wt. percent to 16 wt. percent of the aqueous sizing composition comprising the components A and B as follows:
A) a mixture of low molecular weight polyvinylacetate and middle molecular weight polyvinylacetate, said low molecular weight polyvinyl acetate having an average molecular weight between 60,000 g/mol and 40,000 g/mol and the middle molecular weight polyvinyl acetate (component A) having an average molecular weight between 80,000 g/mol and 180,000 g/mol, and
B) at least one low viscosity partially hydrolysed polyvinyl alcohol,
wherein the weight ratio of A) to B) is between 0.5 and 3.0.

2. The sizing composition of claim 1, **characterized in that** the silane coupling agent is present in amounts ranging from 0.03 wt. percent to 0.5 wt. percent of the aqueous sizing composition.

3. The sizing composition of claim 1, **characterized in that** the lubricant is present in amounts ranging from 0.2 wt. percent to 1.5 wt. percent of the aqueous sizing composition.

4. The sizing composition of claim 1, **characterized in that** the aqueous sizing has a pH value from pH 3 to pH 7.

5. The sizing composition of claim 1, **characterized in that** the mixture of component A) has a weight ratio of low molecular weight polyvinyl acetate to middle molecular weight polyvinyl acetate from 0.5 to 2.

6. The sizing composition of claim 1, **characterized in that** the mixture of component A) has a weight ratio of low molecular weight polyvinyl acetate to middle molecular weight polyvinyl acetate from 0.5 to 0.95.

7. The sizing composition of claim 1, **characterized in that** the at least one low viscosity partially hydrolysed polyvinyl alcohol, the component B, has an average molecular weight between 10,000 g/mol and 60,000 g/mol.

8. The sizing composition of claim 1, **characterized in that** the at least one low viscosity partially hydrolysed polyvinyl alcohol, the component B, has a degree of hydrolysis between 80.0 and 95.0 mol. %.

9. Inorganic fiber coated with a dried sizing composition as claimed in claim 1 to 8, said fiber is coated with the dried sizing composition in an amount corresponding to a loss on ignition of the sized inorganic fibers being in the range of 0.2 to 2.0 wt. percent and having a dispersibility of at least 50% in water.

10. The inorganic fiber of claim 9, **characterized in that** the inorganic fiber material is a glass fiber, ceramic fiber, carbon fiber, inorganic mineral fiber based on oxides, carbides, nitrides and borides of silica, aluminum, zircon, magnesium and zirconium or a mixture of said fibers.

11. Hydraulic set board comprising a hydraulic set cement or gypsum core and reinforcing inorganic fibers, **characterized in that** the inorganic fibers are coated with a dried sizing composition as claimed in claim 1 to 8.

## Patentansprüche

1. Wässrige Schlichtezusammensetzung, umfassend
(i) mindestens einen polymeren Filmbildner,
(ii) mindestens ein Verbindungsmittel,
(iii) ein oder mehrere Gleitmittel,
(iv) ein oder mehrere antistatische Mittel,
(v) Wasser,
wobei es sich bei dem mindestens einen Verbindungsmittel um ein Silanverbindungsmittel und bei dem polymeren Filmbildner um eine Zusammensetzung handelt, die in Mengen im Bereich von 4 Gew.-% bis 16 Gew.-% der wässrigen Schlichtezusammensetzung vorhanden ist, umfassend die Komponenten A und B wie folgt:
A) eine Mischung aus einem Polyvinylacetat mit niedriger Molekülmasse und einem Polyvinylacetat mit mittlerer Molekülmasse, wobei das Polyvinylacetat mit niedriger Molekülmasse eine durchschnittliche Molekülmasse zwischen 60.000 g/mol und 40.000 g/mol aufweist und das Polyvinylacetat mit mittlerer Molekülmasse (Bestandteil A) eine durchschnittliche Molekülmasse zwischen 80.000 g/mol und 180.000 g/mol aufweist, und
B) mindestens ein partiell hydrolysierter Polyvinylalkohol mit niedriger Viskosität, wobei das Gewichtsverhältnis von A) zu B) zwischen 0,5 und 3,0 liegt.

2. Schlichtezusammensetzung nach Anspruch 1, **dadurch gekennzeichnet, dass** das Silanverbindungsmittel in Mengen im Bereich von 0,03 Gew.-% bis 0,5 Gew.-% der wässrigen Schlichtezusammensetzung vorhanden ist.

3. Schlichtezusammensetzung nach Anspruch 1, **dadurch gekennzeichnet, dass** das Gleitmittel in Mengen im Bereich von 0,2 Gew.-% bis 1,5 Gew.-% der wässrigen Schlichtezusammensetzung vorhanden ist.

4. Schlichtezusammensetzung nach Anspruch 1, **dadurch gekennzeichnet, dass** die wässrige Schlichte einen pH-Wert von pH 3 bis pH 7 aufweist.

5. Schlichtezusammensetzung nach Anspruch 1, **dadurch gekennzeichnet, dass** die Mischung von Komponente A ein Gewichtsverhältnis von Polyvinylacetat mit niedriger Molekülmasse zu Polyvinylacetat mit mittlerer Molekülmasse von 0,5 bis 2 aufweist.

6. Schlichtezusammensetzung nach Anspruch 1, **dadurch gekennzeichnet, dass** die Mischung von Komponente A ein Gewichtsverhältnis von Polyvinylacetat mit niedriger Molekülmasse zu Polyvinylacetat mit mittlerer Molekülmasse von 0,5 bis 0,95 aufweist.

7. Schlichtezusammensetzung nach Anspruch 1, **dadurch gekennzeichnet, dass** der mindestens eine partiell hydrolysierte Polyvinylalkohol mit niedriger Viskosität, die Komponente B, eine durchschnittliche Molekülmasse zwischen 10.000 g/mol und 60.000 g/mol aufweist.

8. Schlichtezusammensetzung nach Anspruch 1, **dadurch gekennzeichnet, dass** der mindestens eine partiell hydrolysierte Polyvinylalkohol mit niedriger Viskosität, die Komponente B, einen Hydrolysegrad zwischen 80,0 und 95,0 Mol-% aufweist.

9. Mit einer getrockneten Schlichtezusammensetzung nach Anspruch 1 bis 8 beschichtete anorganische Faser, wobei die Faser mit der getrockneten Schlichtezusammensetzung in einer Menge beschichtet ist, die einem Glühverlust der geschlichteten anorganischen Fasern im Bereich von 0,2 bis 2,0 Gew.-% entspricht und eine Dispergierbarkeit von mindestens 50 % in Wasser aufweist.

10. Anorganische Faser nach Anspruch 9, **dadurch gekennzeichnet, dass** es sich bei dem anorganischen Fasermaterial um eine Glasfaser, eine Keramikfaser, eine Kohlenstofffaser, eine anorganische Mineralfaser auf der Grundlage von Oxiden, Carbiden, Nitriden und Boriden von Siliciumdioxid, Aluminium, Zirkon, Magnesium und Zirkonium oder eine Mischung dieser Fasern handelt.

11. Hydraulische Setzplatte, umfassend einen hydraulisch abbindenden Zement- oder Gipskern und verstärkende anorganische Fasern, **dadurch gekennzeichnet, dass** die anorganischen Fasern mit einer getrockneten Schlichtezusammensetzung nach Anspruch 1 bis 8 beschichtet sind.

## Revendications

1. Composition d'encollage aqueuse comprenant
(i) au moins un formateur de film polymère,
(ii) au moins un agent de couplage,
(iii) un ou plusieurs lubrifiants,
(iv) un ou plusieurs agents antistatiques,
(v) l'eau,
où au moins un agent de couplage est un agent de couplage de silane et le formateur de film polymère est une composition présente en quantités allant de 4 pourcents en poids à 16 pourcents en poids de la composition d'encollage aqueuse comprenant les composants A et B comme suit:
A) un mélange de polyvinylacétate de poids moléculaire réduit et de polyvinylacétate de poids moléculaire moyen, ledit polyvinylacétate de poids moléculaire réduit ayant un poids moléculaire moyen entre 60,000 g/mol et 40 000 g/mol et le polyvinylacétate de poids moléculaire moyen (composant A) ayant un poids moléculaire moyen entre 80000 g/mol et 180 000 g/mol, et
B) au moins un polyvinylalcool partiellement hydrolysé de viscosité réduite, où le rapport des poids A) à B) est entre 0,5 et 3,0.

2. Composition d'encollage selon la revendication 1, **caractérisée en ce que** l'agent de couplage de silane est présent en quantités allant de 0,03 pourcent en poids à 0,5 pourcent en poids de la composition d'encollage aqueuse.

3. Composition d'encollage selon la revendication 1, **caractérisée en ce que** le lubrifiant est présent en quantités allant de 0,2 pourcent en poids à 1,5 pourcent en poids de la composition d'encollage aqueuse.

4. Composition d'encollage selon la revendication 1, **caractérisée en ce que** l'encollage aqueux a une valeur pH de pH 3 à pH 7.

5. Composition d'encollage selon la revendication 1, **caractérisée en ce que** le mélange de composant A) a un rapport des poids de polyvinylacétate de poids moléculaire réduit au polyvinylacétate de poids moléculaire moyen de 0,5 à 2.

6. Composition d'encollage selon la revendication 1, **caractérisée en ce que** le mélange de composant A) a un rapport des poids de polyvinylacétate de poids moléculaire réduit au polyvinylacétate de poids moléculaire moyen de 0,5 à 0,95.

7. Composition d'encollage selon la revendication 1, **caractérisée en ce qu'**au moins un polyvinylalcool partiellement hydrolysé de viscosité réduite, le composant B a un poids moléculaire moyen entre 10 000 g/mol et 60 000 g/mol.

8. Composition d'encollage selon la revendication 1, **caractérisée en ce qu'**au moins un polyvinylalcool partiellement hydrolysé de viscosité réduite, le composant B a un degré d'hydrolyseentre 80,0 et 95,0% mol.

9. Fibre inorganique revêtue avec une composition d'encollage sèche selon la revendication 1 à 8, ladite fibre est revêtue avec la composition d'encollage sèche dans une quantité correspondant à une perte par ignition des fibres inorganiques encollées étant dans l'intervalle de 0,2 à 2,0 pourcent en poids et ayant une dispersibilité d'au moins 50% dans l'eau.

10. Fibre inorganique selon la revendication 9, **caractérisée en ce que** le matériau de fibre inorganique est une fibre de verre, fibre céramique, fibre de carbone, fibre minérale inorganique à base d'oxydes, carbures, nitrures et borures de silice, aluminium, zircon, magnésium et zirconium ou un mélange desdites fibres.

11. Tableau hydraulique comprenant un cément hydraulique ou noyau de gypse et les fibres inorganiques de renforcement, **caractérisé en ce que** les fibres inorganiques sont revêtues avec une composition d'encollage sèche selon la revendication 1 à 8.
